# EUROPEAN PATENT SPECIFICATION

(11) **EP 3 115 314 B1**
(45) Date of publication and mention of the grant of the patent: **28.02.2018**
(21) Application number: 16168329.7
(22) Date of filing: 04.05.2016
(51) Int. Cl.: B65D 77/24, B65D 85/78, A23G 9/50

(54) **CONE COMPRISING A CASING FOR A TOY**
KONUS MIT EINEM GEHÄUSE FÜR EIN SPIELZEUG
CÔNE COMPRENANT UN BOÎTIER POUR UN JOUET

(43) Date of publication of application: 11.01.2017
(73) Proprietor: Ozbek, Yildirim, Istanbul (TR)
(72) Inventor: Ozbek, Yildirim, Istanbul (TR)
(74) Representative: Mutlu, Aydin

(56) References cited:
- EP-A1- 1 639 900
- WO-A1-03/013265
- GB-A- 2 190 893
- GB-A- 2 353 199
- US-A- 4 444 795

## Description

### Technical Field of the Invention

The present invention relates generally to a cone comprising a case for a surprise toy. The invention particularly relates to a cone formed with an edible cone and a casing for a small toy wherein the casing is introduced on foodstuff of said edible cone in a way to form a relatively bigger cone body.

### Background of the Invention

Confectionery products such as an ice cream provided with a toy as a surprise gift for the kids are well known in the prior art. Such products are mainly supplied in a container which provides a separate area for both foodstuff and the toy. These containers used for providing ice cream with a toy are especially formed as an ice cream cone holder which isolates the ice-cream cone from the hand contact of a user, while they provide a separate area in their structure for the surprise gifts. These types of containers are generally known as a supporting item in order to receive the foodstuff and the surprise gift in two separate areas in a single piece and mostly produced from a material which cannot be consumed.

An example for such cone holders is disclosed in the document EP 1639900 A1 wherein the cone holder comprises an open hollow body for supporting an ice-cream cone partially inserted therein. When the ice-cream cone is placed onto the cone holder, there is provided a hollow area in the lower portion of the cone holder in order to introduce a capsule for a toy therein.

Another example in this field is disclosed in the document GB 2190893 A wherein the container for a food substance is formed by a frusto-conical upper body intended to be used for confectionery such as ice-cream and by a cylindrical lower body integrated with the upper body. Said lower body comprises a closure at the bottom of the container and there is provided a hollow area inside the said cylindrical body in order to embed a toy therein.

One of the main issues related to such cone holders is that, as explained above, both types of containers are not produced from an edible material, therefore when the users consume the confectionery product and take the toy out, they generally throw away said containers. Such disposable containers cause a redundant cost for the manufacturers. Additionally, it should be also noted that such containers generate an excessive increase in size for these kinds of confectionery products, which is not preferred by the traders because the products occupy an unnecessary place on the shelves of the markets. One another drawback of the conventional products is that they fail to combine an edible product such as a cone with the non-edible part (i.e. toy's receptacle) into the one single integrated packaging and geometry. Apart from that, it is burdensome for the kids to reach to the surprise toy, and mostly the receptacle of the toy is placed underneath the confectionary product.

The present invention is based on the principle of offering a case for a surprise toy on a conventional cone such as an ice cream cone, without increasing size of the packaging excessively while providing an attractive and relatively bigger cone view from outside. In addition, the present invention advantageously allows air insulation by locating a partially empty receptacle on the foodstuff of the cone and said insulation prevents melting of the foodstuff at a relatively higher ambient temperature. Said foodstuff can for instance be ice cream, chocolate, marshmallow, candy etc.

### Brief Description of the Invention

The present invention relates to a cone (1) accommodating a surprise toy along with a foodstuff (5). The cone comprises an edible cone (2) and a casing volume (3) for holding the toy's receptacle (20), and said casing volume (3) is located on top of the edible cone (2). The casing volume (3) has a sidewall (7) which expands in vertical direction (y), and said edible cone (2) comprises a hollow body having a wall (6) which expands from its lowermost end to its uppermost end. Advantageously, the sidewall (7) of the casing volume (3) and the wall (6) of the edible cone (2) are arranged substantially in a linear alignment such that they have substantially the same inclination angle (α) with respect to horizontal axis (x) in order to form an integral cone (1). The cone (1) further comprises a receptacle (20) placed into the casing volume (3) for holding a toy therein, and said receptacle (20) has a truncated cone shape with a sidewall (16) having substantially the same inclination angle (α) with the sidewall (7) of the casing volume (3), with respect to the horizontal axis (x), such that the receptacle (20) substantially occupies the casing volume (3).

The receptacle (20) according to the present invention may comprise a lid (15) which can be freely closable to a mouth (18) portion thereof, or fixed to at least one portion of the mouth (18) of the receptacle (20) with a connecting element (12).

The foodstuff (5) on the other hand may for instance be selected from the group of ice cream, cacao cream, chocolate, marshmallow and candy.

In preferred embodiments, the cone (1) according to the present invention may further comprise a separator (4) located between the foodstuff (5) of the edible cone (2) and bottom portion (17) of the receptacle (20) in order to isolate the foodstuff (5) from contact with the said receptacle (20). Said separator (4) may be in the form of a hoop having a vertically extending rim in order to form a basis for the toy's receptacle (20) and to form a closure for the foodstuff (5) contained in the edible cone (2). Preferably, said separator (4) is narrowed in vertical axis (y) from an open inlet (14) to the lower portion (13) in order to be introduced into the mouth portion (9) of the edible cone (2).

The edible cone (2) may comprise a conic or a frusto-conical shape wherein the wall (6) of the edible cone (2) can be in a cylindrical or cornered form.

The cone (1) according this invention may further comprise a wrapping material (11) which constitutes sidewalls (7) of the casing volume (3) for wrapping up the receptacle (20). Additionally, the cone (1) may also comprise a packing cover (10) in order to close the mouth portion (8) of the cone (1), which is independently provided or is fixed to the wrapping material (11) from a portion thereof. The edible cone (2) as mentioned herein can be made of any eatable material such as wafer or biscuits.

### Brief Description the Figures

Figure 1 shows perspective view of the cone according to an embodiment of the present invention.
Figure 2 shows a cross-sectional view of the cone according to the present invention.
Figure 3 shows a representative view of the cone according to the present invention wherein the cone comprises a packaging material wrapping up the cone.
Figure 4 shows perspective view of the toy's receptacle with a lid, for use in the present invention.
Figure 5 shows a perspective view of the receptacle case without a lid.

### Detailed Description of the Invention

The present invention generally relates to a cone (1) comprising an edible cone (2) and a casing volume (3) located on said edible cone (2) wherein said casing volume (3) is configured to have a cone shaped hollow body as a continuation of the cone (2) to receive a toy as a surprise gift for the kids.

The cone (1) comprising the casing volume (3) and the edible cone (2) are formed to have a conic or a frusto-conical hollow body. The term "conic" or "frusto-conical" refers to a shape in which the structure has a lowermost area differing from the uppermost area such that the structure is not a cylinder. The periphery of the conic or frusto-conical cone (1) may be in a circular form or in a cornered form.

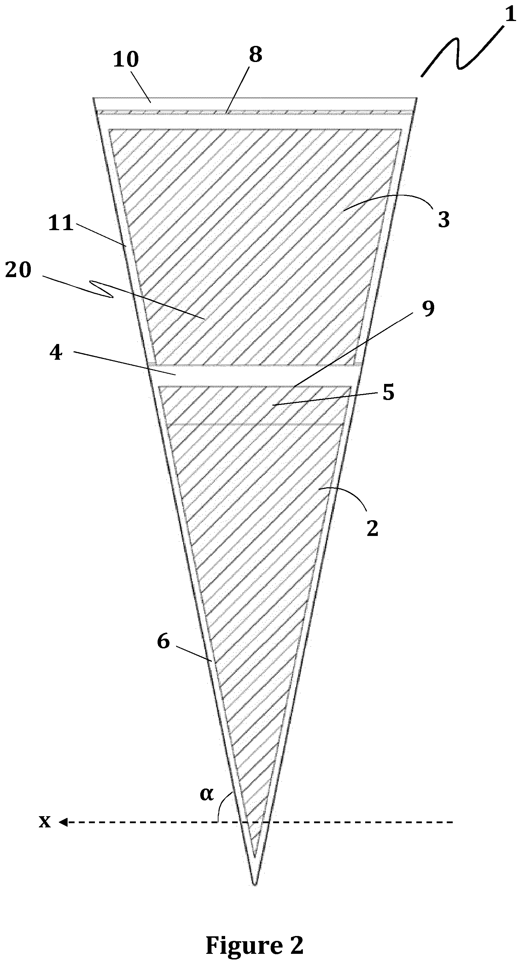

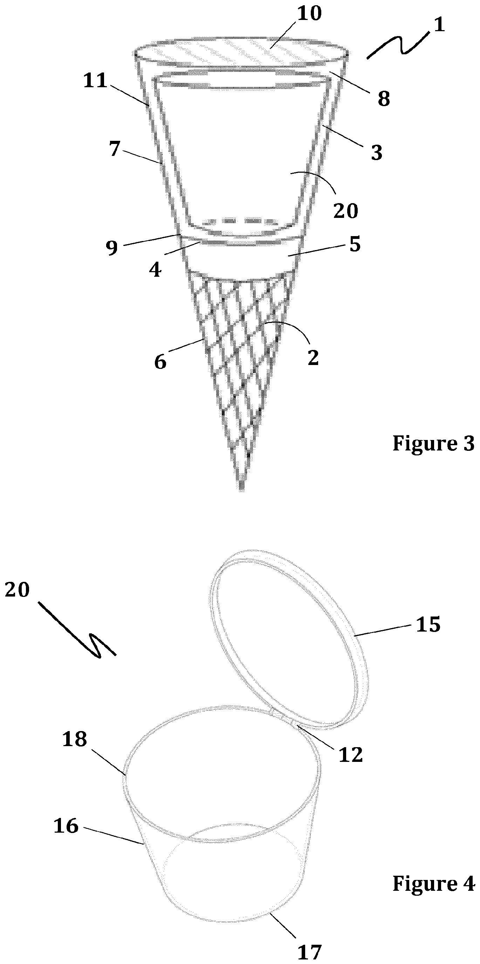

As shown in Figs. 2 and 3, the casing volume (3) is of the frusto-conical shape having preferably a circular periphery which rises from mouth portion (9) of the edible cone (2) such that the sidewall (7) defining the casing volume (3) is expanding from said mouth portion (9) of the edible cone (2) to the mouth (8) of the overall cone (1) along a straight line as a continuation of the edible cone (2). The casing volume (3) is integrated with the edible cone (2) such that both the sidewall (7) of the casing volume (3) and the wall (6) of the edible cone (2) provides substantially a straight line, and therefore having substantially the same inclination angle (α) with respect to the horizontal axis (x). In addition, bottom portion (17) of the receptacle (20) may be intended to be used as a coverage on the foodstuff (5) of the edible cone (2). Therefore, the casing volume (3) as mentioned herein is designed to have a toy's receptacle (20) which has a shape of truncated cone.

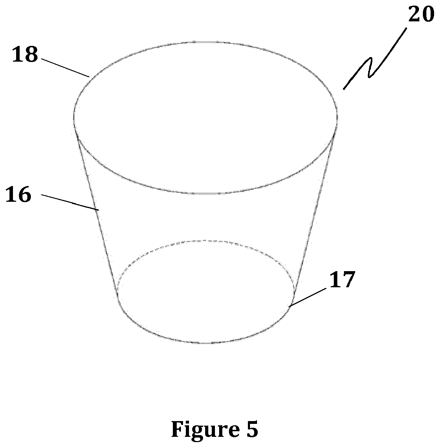

As shown in Figs. 4 and 5, receptacle (20) may comprise a lid (15) for the purpose of preventing the toy (not shown) from falling wherein the lid (15) may be freely connected to the mouth (8) or may be hinged thereto with a connecting element (12) which allows opening of the lid (15). It has to be noted that the receptacle (20) is designed to fill the casing volume (3) preferably in a tight fashion such that it does not move inside the said casing volume (3). Therefore, it is designed in a geometry, i.e. truncated cone, to fill the casing volume (3) which is having substantially the same geometry with the receptacle (20). In this respect, the sidewall (16) of the receptacle (20) has substantially the same inclination angle (α) with sidewall (7) of the casing volume (3) as well as the wall (6) of the edible cone (2), with respect to the horizontal axis (x).

As can be appreciated by those skilled in the art, a cone shaped body has varying cross-sectional areas throughout the vertical axis (y), and also the receptacle (20) having the shape of truncated cone will have a bottom portion (17) having an area larger than at least some certain part of the cone (1). It is therefore clear that the receptacle (20), when placed into the casing volume (3), would not need a support in order to hold this receptacle (20) above the foodstuff (5) because either of the sidewall (7) of the casing volume (3) or the wall (6) of the edible cone (2) as such will be supporting receptacle (20) in a level above the foodstuff (5) because of the narrowing of the cross-section in vertical direction (y). Therefore, it is possible to form an air insulation area between the foodstuff (5) and bottom portion (17) of the receptacle (20) without needing a supporting surface. In another embodiment, however, a separator (4) can be provided in this area to provide a further insulation of the foodstuff (5) as explained below.

Therefore, the cone (1) may further comprise a separator (4) to form bottom area of the casing volume (3) between the mouth portion (9) of the edible cone (2) and the bottom portion (17) of the receptacle (20) in order to isolate the foodstuff (5) from contact with the said receptacle (20), which clearly safeguards any harmful effect of the receptacle (20) on the foodstuff (5). Said separator (4) is preferably produced from paper, cardboard, polyproylene or any other material which is suitable for contacting with the foodstuff (5). The separator (4) is preferably coated with a polymer film to form a laminate with the separator (4) as an additional measure for safety.

In a preferred embodiment, the separator (4) may be in a cylindrical disc form or in a cornered disc form lying on the horizontal axis (x) to cover the foodstuff (5) of the edible cone (2) and isolate the foodstuff (5) from the bottom portion (17) of the receptacle (20).

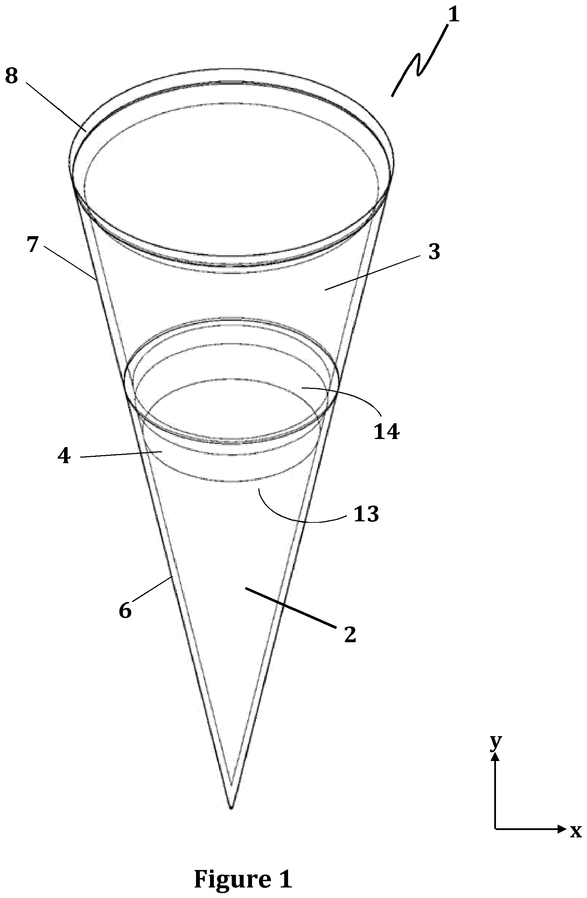

As shown in Fig. 1, as a further embodiment, the separator (4) may be provided as a hoop having a vertically extending rim forming as a basis for the toy's receptacle (20). The side surface of the separator (4) isolate the foodstuff (5) of the edible cone (2) from the wrapping material (11). Said side surface of the separator (4) is narrowed in the vertical axis (y) from the open inlet (14) to the lower portion (13) in order to be introduced onto the edible cone (2) such that it would cover and isolate the foodstuff (5). Said separator (4) is adapted to be removable when the cone (1) is unpacked.

In this embodiment, the separator (4) as a hoop serves as a closure in order to prevent air contact on the foodstuff (5) when the cone (1) is unpacked and the receptacle (20) is separated from the edible cone (2). If the consumer does not desire to eat the foodstuff (5) after removing the casing volume (3) from the cone (1) to have the toy, said closure of the separator (4) keep the foodstuff (5) covered.

The edible cone (2) may be produced by wafer, biscuits or any eatable filler material, therefore when the cone (1) is unpacked and the casing volume (3) is removed, the edible cone (2) can be completely eaten by the consumer.

The cone (1) may further comprise a packing cover (10) in order to close mouth portion (8) of the cone (1), which can be freely located on the cone (1) or can be fixed to the wrapping material (11) from a portion thereof.

Additionally, the foodstuff (5) of the edible cone (2) can be ice cream, cacao cream, chocolate, marshmallow, candy or any other confectionery food which is suitable for being offered on an edible cone (2). These foodstuff (5) may be a mixture or combination of the material mentioned above which may include a topping portion formed by addition of further foodstuff and dressing material such as dragee, pieces of hazelnut and peanut or popping candies.

The cone (1) of the present invention provides an advantage for the confectionery products, which offer a foodstuff (5) with a toy, by decreasing the size of such products while increasing the effective volume for the toy, by means of locating the casing volume (3) and toy's receptacle (20) for the surprise gift on the foodstuff (5) of the edible cone (2).

Additionally, the receptacle (20) is adapted to provide substantially the same inclination with the wall (6) of the edible cone (2) and it is located on the edible cone (2) to offer a proper packaging and providing a view of an integral cone from the outside to the customers. This arrangement is also advantageous for ensuring heat insulation of the confectionary product by virtue of the air occupying inner volume of the toy's receptacle (20). It can be appreciated by those skilled in the art that the larger area of heat transfer for a confectionary product held in a cone is actually the top portion thereof and melting starts from this portion due to the larger area exposed to ambient temperature. With the present structure of the cone (1) according to the invention, melting of the confectionary product is considerably retarded even if the product is exposed to relatively high temperatures above melting point of the foodstuff (5).

## Claims

1. A cone (1) accommodating a surprise toy along with a foodstuff (5) comprising an edible cone (2) and a casing volume (3) for holding the toy **characterized in that** said casing volume (3) is located on top of the edible cone (2) and having a sidewall (7) which expands in vertical direction (y), and said edible cone (2) comprises a hollow body having a wall (6) which expands from its lowermost end to its uppermost end, wherein;
the sidewall (7) of the casing volume (3) and the wall (6) of the edible cone (2) are arranged in substantially a linear alignment such that they have substantially the same inclination angle (α) with respect to horizontal axis (x) in order to form an integral cone (1), and
the cone (1) further comprises a receptacle (20) placed into the casing volume (3) for holding a toy therein, said receptacle (20) having a truncated cone shape with a sidewall (16) having substantially the same inclination angle (α) with the sidewall (7) of the casing volume (3), with respect to the horizontal axis (x), such that the receptacle (20) substantially occupies the casing volume (3).

2. A cone (1) according to claim 1 wherein the receptacle (20) comprises a lid (15) which is freely closable to a mouth (18) portion thereof or fixed to at least one portion of the mouth (18) of the receptacle (20) with a connecting element (12).

3. A cone (1) according to claim 1 wherein said edible cone (2) comprises a foodstuff (5) and said foodstuff (5) is selected from the group of ice cream, cacao cream, chocolate, marshmallow and candy.

4. A cone (1) according to claim 1 wherein said cone (1) comprises a separator (4) located between the foodstuff (5) of the edible cone (2) and bottom portion (17) of the receptacle (20) in order to isolate the foodstuff (5) from contact with the said receptacle (20).

5. A cone (1) according to claim 4 wherein said separator (4) is in the form of a hoop having a vertically extending rim in order to form a basis for the toy's receptacle (20) and to form a closure for the foodstuff (5) contained in the edible cone (2).

6. A cone (1) according to claim 5 wherein said separator (4) is narrowed in vertical axis (y) from an open inlet (14) to the lower portion (13) in order to be introduced into the mouth portion (9) of the edible cone (2).

7. A cone (1) according to claim 1 wherein said edible cone (2) comprises a conic or a frusto-conical shape wherein the wall (6) of the edible cone (2) is in a cylindrical or cornered form.

8. A cone (1) according to claim 1 wherein the cone (1) further comprises a wrapping material (11) which constitutes sidewalls (7) of the casing volume (3) for wrapping up the receptacle (20).

9. A cone (1) according to claim 1 wherein the cone (1) further comprises a packing cover (10) in order to close the mouth portion (8) of the cone (1), which is independently provided or is fixed to the wrapping material (11) from a portion thereof.

10. A cone (1) according to claim 1 wherein the edible cone (2) comprises wafer or biscuits.

## Patentansprüche

1. Ein Konus (1), der ein Überraschungsspielzeug zusammen mit einem Nahrungsmittel (5) aufnimmt, der einen essbaren Konus (2) und ein Gehäusevolumen (3) zum Halten des Spielzeugs aufweist, **dadurch gekennzeichnet, dass** das Gehäusevolumen (3) sich oben auf dem essbaren Konus (2) befindet und eine Seitenwand (7) aufweist, die sich in vertikaler Richtung (y) erstreckt, und dass der essbare Konus (2) einen hohlen Körper mit einer Wand (6) aufweist, die sich von dem untersten Ende desselben zu dem obersten Ende desselben erstreckt, wobei
die Seitenwand (7) des Gehäusevolumens (3) und die Wand (6) des essbaren Konus (2) in einer im Wesentlichen linearen Ausrichtung derart angeordnet sind, dass sie bezüglich einer horizontalen Achse (x) im Wesentlichen denselben Neigungswinkel (α) aufweisen, um einen einstückigen Konus (1) zu formen, und
der Konus (1) ferner eine Aufnahmeeinrichtung (20) aufweist, die in dem Gehäusevolumen (3) platziert ist, um in demselben ein Spielzeug zu halten, wobei die Aufnahmeeinrichtung (20) eine Form eines Kegelstumpfs mit einer Seitenwand (16) aufweist, die bezüglich der horizontalen Achse (x) im Wesentlichen denselben Neigungswinkel (α) wie die Seitenwand (7) des Gehäusevolumens (3) aufweist, sodass die Aufnahmeeinrichtung (20) im Wesentlichen das Gehäusevolumen (3) einnimmt.

2. Ein Konus (1) gemäß Anspruch 1, bei dem die Aufnahmeeinrichtung (20) einen Deckel (15) aufweist, der zu einem Abschnitt einer Öffnung (18) derselben hin frei geschlossen werden kann oder an zumindest einem Abschnitt der Öffnung (18) der Aufnahmeeinrichtung (20) mit einem Verbindungselement (12) befestigt ist.

3. Ein Konus (1) gemäß Anspruch 1, bei dem der essbare Konus (2) ein Nahrungsmittel (5) aufweist und das Nahrungsmittel (5) aus der Gruppe aus Eiskrem, Kakaokrem, Schokolade, Marshmallow und Süßigkeiten ausgewählt ist.

4. Ein Konus (1) gemäß Anspruch 1, wobei der Konus (1) einen Trenner (4) aufweist, der sich zwischen dem Nahrungsmittel des essbaren Konus (2) und einem unteren Abschnitt (17) der Aufnahmeeinrichtung (20) befindet, um das Nahrungsmittel (5) vor einer Berührung mit der Aufnahmeeinrichtung (20) zu isolieren.

5. Ein Konus (1) gemäß Anspruch 4, bei dem der Trenner (4) in der Form eines Reifens mit einem sich vertikal erstreckenden Rand ist, um eine Basis für die Aufnahmeeinrichtung (20) des Spielzeugs zu formen und um einen Verschluss für das Nahrungsmittel (5) zu formen, das in dem essbaren Konus enthalten ist.

6. Ein Konus (1) gemäß Anspruch 5, bei dem der Trenner (4) in der vertikalen Achse (y) von einem offenen Einlass (14) zu dem unteren Abschnitt (13) hin verengt ist, um in den Öffnungsabschnitt (9) des essbaren Konus (2) eingeführt zu werden.

7. Ein Konus (1) gemäß Anspruch 1, bei dem der essbare Konus (2) eine kegelförmige oder eine kegelstumpfförmige Form aufweist, wobei die Wand (6) des essbaren Konus (2) in einer zylindrischen oder eckigen Form ist.

8. Ein Konus (1) gemäß Anspruch 1, wobei der Konus (1) ferner ein Umhüllungsmaterial (11), das Seitenwände (7) des Gehäusevolumens (3) bildet, zum Umhüllen der Aufnahmeeinrichtung (20) aufweist.

9. Ein Konus (1) gemäß Anspruch 1, wobei der Konus (1) ferner eine Verpackungsabdeckung (10) zum Verschließen des Öffnungsabschnitts (8) des Konus (1) aufweist, die unabhängig vorgesehen ist oder von einem Abschnitt desselben aus an dem Umhüllungsmaterial (11) befestigt ist.

10. Ein Konus (1) gemäß Anspruch 1, bei dem der essbare Konus (2) eine Waffel oder Gebäck aufweist.

## Revendications

1. Cône (1) contenant un jouet surprise, conjointement avec un produit alimentaire (5), comprenant un cône comestible (2) et un volume formant boîtier (3) destiné à contenir le jouet, **caractérisé en ce que** ledit volume formant boîtier (3) se trouve sur le sommet du cône comestible (2) et présente une paroi latérale (7) qui s'élargit dans la direction verticale (y), et ledit cône comestible (2) comporte un corps creux présentant une paroi (6) qui s'élargit depuis son extrémité inférieure vers son extrémité supérieure, où :
la paroi latérale (7) du volume formant boîtier (3) et la paroi (6) du cône comestible (2) sont disposées dans un alignement sensiblement linéaire tel qu'elles présentent sensiblement le même angle d'inclinaison (α) par rapport à l'axe horizontal (x), en vue de former un cône (1) monobloc, et
le cône (1) comprend en outre un récipient (20) placé dans le volume formant boîtier (3) pour contenir un jouet, ledit récipient (20) ayant une forme de cône tronqué avec une paroi latérale (16) présentant sensiblement le même angle d'inclinaison (α) que la paroi latérale (7) du volume formant boîtier (3), par rapport à l'axe horizontal (x), de manière ce que le récipient (20) occupe sensiblement le volume formant boîtier (3).

2. Cône (1) selon la revendication 1, dans lequel le récipient (20) comporte un couvercle (15) qui peut être fermé librement sur une partie formant embouchure (18) de celui-ci ou est fixé à au moins une partie de l'embouchure (18) du récipient (20), par un élément de liaison (12).

3. Cône (1) selon la revendication 1, dans lequel ledit cône comestible (2) est constitué d'un produit alimentaire (5) et ledit produit alimentaire (5) est sélectionné dans le groupe comprenant de la crème glacée, de la crème au cacao, du chocolat, de la guimauve et des bonbons.

4. Cône (1) selon la revendication 1, dans lequel ledit cône (1) comprend un séparateur (4) situé entre le produit alimentaire (5) du cône comestible (2) et la partie inférieure (17) du récipient (20), afin d'isoler le produit alimentaire (5) du contact avec ledit récipient (20).

5. Cône (1) selon la revendication 4, dans lequel ledit séparateur (4) se présente sous la forme d'un anneau ayant un bord qui s'étend verticalement pour former une base pour le récipient (20) du jouet et pour constituer une fermeture pour le produit alimentaire (5) contenu dans le cône comestible (2).

6. Cône (1) selon la revendication 5, dans lequel ledit séparateur (4) est rétréci dans l'axe vertical (y), depuis une entrée (14) ouverte jusqu'à la partie inférieure (13), afin d'être introduit dans la partie d'embouchure (9) du cône comestible (2).

7. Cône (1) selon la revendication 1, dans lequel ledit cône comestible (2) présente une forme conique ou tronconique, la paroi (6) du cône comestible (2) ayant une forme cylindrique ou angulaire.

8. Cône (1) selon la revendication 1, dans lequel le cône (1) comprend en outre un matériau d'emballage (11) qui constitue les parois latérales (7) du volume formant boîtier (3), pour envelopper le récipient (20).

9. Cône (1) selon la revendication 1, dans lequel le cône (1) comprend en outre un couvercle d'étanchéité (10), destiné à fermer la partie d'embouchure (8) du cône (1), qui est prévu de façon indépendante ou est fixé au matériau d'emballage (11), depuis une partie de celui-ci.

10. Cône (1) selon la revendication 1, dans lequel le cône comestible (2) est constitué d'une gaufre ou de biscuits.
